# FASCICULE DE BREVET EUROPEEN

(11) **EP 1 641 197 B1**
(45) Date de publication et mention de la délivrance du brevet: **17.07.2019**
(21) Numéro de dépôt: 05108924.1
(22) Date de dépôt: 27.09.2005
(51) Int. Cl.: H04L 12/801

(54) **Architecture de communication NoC (réseau sur puce ) pour applications de type flots de données**
NoC(Network on Chip)-Kommunikationsarchitektur für Datenstrom Anwendungen
NoC (Network on Chip) communication architecture for data stream applications

(30) Priorité: 28.09.2004 FR 0452182
(43) Date de publication de la demande: 29.03.2006
(73) Titulaire: Commissariat à l'Énergie Atomique et aux Énergies Alternatives, 75015 Paris (FR)
(72) Inventeur: Clermidy, Fabien, 38120 Saint Egrève (FR); Lattard, Didier, 38680 Rencurel (FR); Varreau, Didier, 38450 Saint Georges de Commiers (FR); Bernard, Christian, 38960 Saint Etienne de Crossey (FR)
(74) Mandataire: Ahner, Philippe

(56) Documents cités:
- RADULESCU A ET AL: "An efficient on-chip network interface offering guaranteed services, shared-memory abstraction, and flexible network con .guration" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 2, 16 février 2004 (2004-02-16), pages 878-883, XP010684780 ISBN: 0-7695-2085-5
- RADULESCU A ET AL: "Communication Services for Networks on Chip"[Online] 2002, pages 275-299, XP002330458 Extrait de l'Internet: URL:http://citeseer.ist.psu.edu/radulescu0 2communication.html> [extrait le 2005-06-03]

## Description

### DOMAINE TECHNIQUE ET ART ANTÉRIEUR

La présente invention se rapporte au domaine des réseaux sur puce ou NoC (NoC ou « Network on Chip » selon la terminologie anglo-saxonne). Elle concerne une structure de réseau sur puce améliorée ainsi que des procédés améliorés de traitement de données ou/et de communication dans un tel réseau.

Une originalité de cette structure est qu'elle est susceptible de pouvoir fonctionner de manière complètement asynchrone et ne nécessite pas de logique spécialisée.

Actuellement, pour faire communiquer entre eux différents modules d'une puce, le moyen principalement utilisé est une topologie de bus. Avec ce type de topologie, les modules d'une puce devant communiquer entre eux sont reliés à un même médium de communication qu'ils utilisent à tour de rôle pour par exemple émettre des données. Un élément central, dit arbitre de bus, donne le droit d'accès au médium pour les différents modules, afin d'éviter des conflits de prise du bus.

Ce système a notamment pour inconvénient de présenter des débits des communications faibles, une latence importante, ainsi que d'être de plus en plus difficile à réaliser notamment en ce qui concerne les arbres d'horloge, et à cause des problèmes de charge capacitive. Il est par ailleurs délicat d'adapter de manière précise le débit assuré par un bus de communication d'une puce à l'application qui est faite de l'ensemble des modules de la puce. Par ailleurs, un tel système est généralement très spécifique à une application donnée et empêche généralement une fois qu'il a été conçu pour une application d'être réutilisé pour une autre application.

En vue d'améliorer les problèmes précités, des réseaux sur puce ou NoC sont apparus. Ces réseaux sur puce utilisent une couche d'interface permettant de gérer les communications entre les différents éléments ou ressources du réseau.

En vue d'effectuer un traitement de flots de données, de tels réseaux sur puce, peuvent, selon un mode de fonctionnement connu, permettre à chaque ressource du réseau de traiter un ensemble de données venant d'une ou plusieurs ressources émettrices et de renvoyer un résultat de ce traitement vers une ou plusieurs ressources réceptrices selon un scénario qui aura été déterminé auparavant. Une fois qu'une ressource a traité des données, la destination que prennent les données traitées est généralement déterminée par un contrôleur général ou contrôleur de réseau.

Il arrive ainsi fréquemment lors d'un traitement que ledit contrôleur de réseau ait une décision à prendre concernant le flot de données transitant dans le réseau.

Le contrôleur de réseau sert à suivre l'évolution du flot de données à chaque instant. Pour cela, il envoie des ordres d'émission aux ressources émettrices, puis un ordre de calcul aux ressources. Selon une première possibilité, les ressources peuvent informer le contrôleur de réseau de l'état d'avancement du traitement que ces dernières effectuent, par exemple au moyen d'interruptions. Le contrôleur de réseau étant susceptible de recevoir sans arrêt des interruptions, le flot de données ne s'écoule que par à-coups.

Selon un autre possibilité, une ressource peut informer le contrôleur de réseau de la fin d'un traitement que cette dernière a effectué, par exemple au moyen de drapeau(x) (flags selon la terminologie anglo-saxonne) envoyés dans un registre du contrôleur de réseau. Ce dernier scrute alors régulièrement ledit registre pour connaître l'avancement du traitement.

Ces deux types de fonctionnement sont très fiables, mais peu performants en terme de latence.

Une proposition d'interface réseau améliorée a été faite par Radulescu et al. dans « An Efficient On Chip Network Interface Offering Guaranted Services, Shared-Memory Abstraction, and Flexible Network Configuration" Proceedings of DATE conf., 2004.

Dans ce document, est décrit notamment un structure synchrone dans laquelle le multiplexage temporel (TDMA pour « Time division multiple access » ou accès multiple par répartition dans le temps) et un système de crédits permettant de réguler le trafic sortant de l'interface et en direction du réseau sont utilisés.

Cette interface est configurable en ce qui concerne le routage des données ainsi que le multiplexage temporel. Cependant une interface réseau telle que proposée dans ce document n'est pas adaptée pour un flot de données. La programmation des communications sans utiliser d'interruptions peut également s'avérer complexe avec ce type d'interface.

Il se pose le problème de trouver une nouvelle structure de réseau sur puce adaptée à des flots de données, dans laquelle les communications sont simplifiées par rapport aux structures existantes.

### EXPOSÉ DE L'INVENTION

L'invention propose un procédé de traitement de données dans un réseau sur puce selon la revendication 1 amélioré par rapport aux procédés de l'art connu notamment en termes de latence et de simplicité de mise en oeuvre des communications entre les différents éléments formant le réseau.

Le réseau peut être formé d'une pluralité d'éléments ou « ressources » aptes à communiquer entre elles et à effectuer des traitements, et d'au moins un élément ou « contrôleur de réseau » apte à initialiser les communications dans le réseau par initialisation d'un système de crédits.

Le procédé de traitement suivant l'invention comprend au moins une première étape de communications entre au moins une première ressource et au moins une seconde ressource, ladite étape de communication comprenant :
a) au moins une émission par la première ressource d'une première pluralité de données spéciales ou « crédits » à destination de la seconde ressource,
b) au moins une réception par la première ressource d'une première pluralité de données à traiter envoyées par la seconde ressource, l'envoi par la seconde ressource de données à traiter à destination de la première ressource étant autorisé suite à une réception par la seconde ressource de crédits émis par la première ressource.

Ainsi, ce procédé permet d'assurer que des données à traiter émises par une ressource seront correctement réceptionnées par une ou plusieurs ressource réceptrices et de synchroniser les flux de données entrant dans chacune des ressources du réseau.

Le procédé est susceptible de comprendre au moins une deuxième étape de communication entre ladite première ressource et ladite seconde ressource ou une troisième ressource, ladite deuxième étape de communication comprenant :
a') au moins une émission par la première ressource d'une deuxième pluralité de données spéciales ou « crédits » à destination de la seconde ou de la troisième ressource,
b') au moins une réception par la première ressource d'une deuxième pluralité de données à traiter envoyées par la seconde ou la troisième ressource.

Dans le procédé de traitement de données suivant l'invention, dans laquelle la première ressource peut traiter au moins une partie des données qu'elle reçoit envoyées par la seconde ou la troisième ressource. Ce traitement dépendra de la nature de la première ressource et pourra être par exemple, un stockage d'au moins une partie des données que la première ressource reçoit, ou, selon un autre exemple, un calcul sur au moins une partie des données que la première ressource reçoit, ou, selon un troisième exemple, un décodage d'au moins une partie des données que la première ressource reçoit.

Suite à la réception de la première et/ou de la deuxième pluralité de données à traiter, la première ressource est susceptible d'envoyer des données à traiter et/ou des données traitées, à une quatrième ressource.

Le procédé mis en oeuvre suivant l'invention est susceptible de comporter, avant l'étape a') ou entre les étapes a') et b') ou après l'étape b'), l'envoi, à une quatrième ressource, d'au moins une partie des données à traiter reçues par la première ressource au cours de l'étape b) et/ou d'au moins une partie des données reçues par la première ressource au cours de l'étape b) et traitées par la première ressource.

Ainsi, le procédé de traitement de données mis en oeuvre suivant l'invention permet de faire coïncider ou de confondre au maximum les instants ou intervalles de temps qu'une ressource consacre au traitement de données avec les instants ou intervalles de temps qu'une ressource consacre aux communications avec d'autres ressources.

Préalablement au début des communications entre les ressources du réseau, une ou plusieurs étapes d'envoi par le contrôleur de réseau de programmations ou de configurations destinées aux différentes ressources du réseau peuvent avoir lieu.

Le procédé suivant l'invention peut ainsi comporter une étape préalable d'envoi à la première ressource, par ledit contrôleur de réseau, de données de configurations de gestions de données, indiquant un ou plusieurs type de traitement à effectuer sur des données et/ou au moins une autre ressource à laquelle envoyer des données traitées ou à traiter, puis de stockage de ces données de configurations de gestions de données en mémoire de la première ressource. La première ressource est susceptible de mémoriser des données de configurations de gestions de données indiquant un ou plusieurs types de traitement à effectuer sur des données et/ou au moins une autre ressource à laquelle envoyer des données traitées ou à traiter.

Les données à traiter reçues au cours de l'étape b) et/ou au cours de l'étape b') du procédé suivant l'invention peuvent comprendre des données dites données d'étiquette comportant des données de sélection de configuration de gestion de données parmi une pluralité de configurations de gestion de données mémorisées.

Ainsi les données à traiter reçues par une ressource permettent de programmer le fonctionnement de cette ressource, en ce qui concerne le traitement qu'elle aura à effectuer sur lesdites données, ainsi que sur la destination future desdites données une fois traitées.

La destination des crédits émis par la première ressource peut être quant à elle définie dans une programmation ou « configuration de gestion de crédits » courante que la première ressource utilise, la « configuration de gestion de crédits » courante ayant été sélectionnée parmi plusieurs configurations de gestion de crédits différentes stockées en mémoire de la première ressource.

Lesdites configurations de gestions de crédits de la première ressource peuvent avoir été envoyées à la première ressource par ledit contrôleur de réseau avant d'être stockées en mémoire, et éventuellement, avant tout échange de données ou de crédits entre des ressources du réseau.

De cette manière, l'enchaînement des communications qu'une ressource va effectuer avec une ou plusieurs autres ressources peut être préprogrammé, et se dérouler de manière automatique lors d'un traitement de données.

Les étapes a) et/ou a') du procédé peuvent être précédées d'un envoi, par le contrôleur de réseau d'une instruction de démarrage des communications dans le réseau.

Le contrôleur de réseau est également susceptible d'envoyer une instruction de sélection séquentielle d'une ou de plusieurs configurations de gestions de crédit, préalablement à l'étape a) ou/et à l'étape a')

Selon une mise en oeuvre particulière, ladite instruction de sélection séquentielle d'une ou de plusieurs configurations de gestions de crédits, peut être comprise dans l'instruction de démarrage des communications dans le réseau.

L'invention propose une architecture de réseau sur puce formée d'une pluralité d'éléments ou « ressources » aptes à communiquer entre elles et à effectuer des traitements, et d'au moins un élément ou « contrôleur de réseau » apte à initialiser les communications dans le réseau. Le fonctionnement d'une ressource au niveau de ses communications et des traitements qu'elle effectue est déterminé par une programmation ou configuration que cette ressource utilise. Dans une architecture de réseau mise en oeuvre suivant l'invention, les ressources peuvent être re-configurables au cours d'un traitement de données, ainsi qu'entre deux traitements de données.

Une ressource peut ainsi être amenée à effectuer au moins une première série de communications avec d'autres ressources suivant une instruction envoyée par le contrôleur de réseau, puis à effectuer au moins une seconde série de communications différente de la première série, avec d'autres ressources suivant ladite instruction ou suivant une autre instruction envoyée par le contrôleur de réseau.

Au cours du traitement d'un flot de donnée, une ressource d'une telle architecture peut être également amenée à effectuer au moins une première série de traitements, puis à effectuer au moins une seconde série de traitements différente de la première série.

Un flot de données dans une telle architecture peut s'écouler tant qu'il n'y a pas de décision complexe à prendre concernant les communications ou les configurations des différentes ressources.

L'invention concerne un dispositif de réseau sur puce selon la revendication 14 comprenant au moins un élément ou une « ressource » apte à communiquer, avec une ou plusieurs autres ressources du réseau et apte à effectuer au moins un traitement de données, ladite ressource comprenant des moyens formant une interface avec le réseau comportant:
- des moyens d'émission de données spéciales ou « crédits » aptes à émettre des crédits à destination d'une ou plusieurs ressources du réseau,
- des moyens de réception de crédits aptes à recevoir des crédits en provenance d'une ou de plusieurs ressources du réseau,
- des moyens d'émission de données à traiter, aptes à émettre des données à traiter à destination d'une ou plusieurs ressources du réseau,
- des moyens de réception de données aptes à recevoir des données à traiter en provenance d'une ou de plusieurs ressources du réseau, les moyens formant une interface avec le réseau comportant en outre :
- des moyens pour autoriser l'émission par lesdits moyens d'émission de données, de données à traiter à destination d'au moins une première ressource desdites autres ressources du réseau suite à la réception, par lesdits moyens de réception de crédits provenant de ladite première ressource.

Les moyens formant une interface réseau d'une ressource mise en oeuvre suivant l'invention peuvent comprendre en outre des moyens pour autoriser la réception de données par lesdits moyens de réception de données en provenance d'au moins une seconde ressource, suite à la réception de crédits par lesdits moyens de réception de crédits provenant de ladite seconde ressource.

La destination de crédits susceptibles d'être émis par les moyens d'émission de crédits peut être fonction d'un type de programmation ou configuration dit de gestion de crédits utilisés par les moyens d'interface réseau. Les moyens d'interface réseau peuvent ainsi comprendre en outre :
- des moyens de stockage aptes à stocker plusieurs configurations de gestion de crédits différentes,
- des moyens de sélection de configuration aptes à sélectionner en fonction d'au moins une instruction séquentielle provenant du contrôleur de réseau, au moins une configuration de gestion de crédits courante parmi lesdites plusieurs configurations de gestion de crédits.

La destination de données susceptibles d'être émis par les moyens d'émission de données peut être fonction d'un type de programmation ou configuration dite de gestion de donnée utilisée par les moyens d'interface réseau. Lesdits moyens de stockage de l'interface peuvent permettre en outre de stocker plusieurs configurations de gestion de données différentes. Les moyens de sélection de configuration peuvent quant à eux permettre en outre de sélectionner, éventuellement en fonction d'au moins une donnée de sélection ou « étiquette » comprise dans un paquet de données à traiter reçu par lesdits moyens récepteurs de données, au moins une configuration de gestion de données courante parmi lesdites plusieurs configurations de gestion de données.

Les moyens formant une interface réseau de la ressource peuvent comprendre en outre des moyens d'émission de messages vers le contrôleur et notamment des moyens d'émission d'interruptions afin, par exemple, que la ressource puisse informer le contrôleur de réseau de la fin d'une action ou d'un traitement, ou qu'une erreur est survenue.

Selon une mise en oeuvre particulière, une ressource suivant l'invention peut comprendre des moyens pour traiter plusieurs flux simultanés ou concurrents de données ou/et de crédits en entrée et des moyens pour traiter plusieurs flux simultanés ou concurrents de données ou/et de crédits en sortie.

Selon une autre mise en oeuvre particulière, une ressource suivant l'invention peut comprendre des moyens pour traiter plusieurs flux séquentiels de données ou/et de crédits en entrée et des moyens pour traiter plusieurs flux séquentiels de données ou/et de crédits en sortie.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 représente un exemple d'architecture de réseau sur puce mise en oeuvre suivant l'invention ;
- la figure 2 représente un exemple de structure détaillée d'une ressource d'un réseau sur puce mis en oeuvre suivant l'invention ;
- les figures 3A-3M représentent différentes étapes d'un exemple de procédé mis en oeuvre suivant l'invention;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### DESCRIPTION DETAILLEE

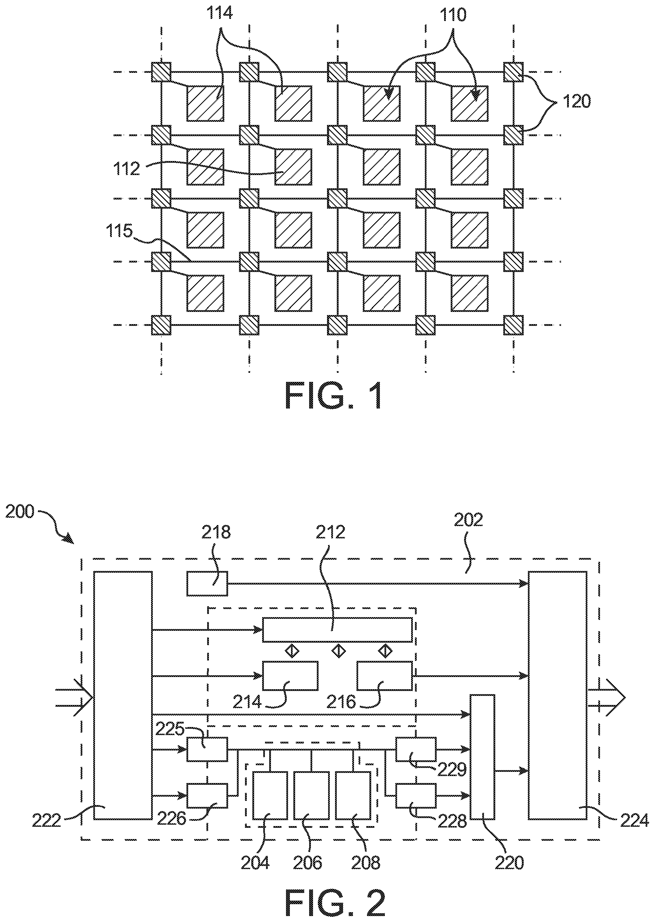

La figure 1 représente un exemple d'architecture de réseau sur puce ou NoC (NoC pour « network on Chip » selon la terminologie anglo-saxonne) mise en oeuvre suivant l'invention.

Cette architecture comprend une pluralité d'éléments 110 aptes à communiquer entre eux et à s'échanger des données. Des liens notés 115, permettent de relier lesdits éléments 110, tandis que des noeuds notés 120 permettent quant à eux d'établir une connexion physique entre les différents liens 115 ainsi qu'un aiguillage des communications. Les noeuds 120 peuvent être également amenés à arbitrer l'ordre de passage de plusieurs paquets de données issus par exemple de liens 115 différents. Cet arbitrage pourra être réalisé par exemple selon un système de priorité fixe, de « round robin » ou permutation circulaire, ou encore selon un système TDMA (TDMA pour « time division multiple access » ou accès multiple par répartition dans le temps). L'aiguillage ou routage pourra être quant à lui effectué de manière dynamique par exemple de type « odd even turn model » tel que défini dans le document [1] ou de type « message flow model » tel que défini dans le document [2], ou encore un procédé de routage tel que défini dans le document [3]. Le routage pourra être également un routage statique par exemple effectué par le biais de tables de routages comprises dans les noeuds ou d'algorithmes de routage horizontal puis vertical.

L'exemple d'architecture de réseau sur puce illustrée sur la figure 1 a une topologie dite « de maillage » ou matricielle. Ainsi chaque noeud 120 est relié à quatre autres noeuds voisins ainsi qu'à un desdits éléments 110.

L'architecture de réseau sur puce mise en oeuvre suivant l'invention n'est pas limitée à cette topologie et peut avoir une tout autre topologie, par exemple une topologie de type hypercube, arbre, anneau, ou tore, etc....

Parmi l'ensemble des éléments 110 compris dans une telle architecture, au moins un élément noté 112 joue le rôle de maître et permet notamment d'initier les communications sur le réseau. Cet élément 112 que l'on nommera « contrôleur de réseau », a ainsi la possibilité de programmer les communications entre une pluralité d'autres éléments du réseau que l'on nommera « ressources » 114, et qui permettent quant à elles de réaliser des tâches telles que des traitements de données élémentaires, par exemple des calculs, ou des stockages de données, ou des codages/décodages de données.

Le contrôleur de réseau 112 peut se présenter par exemple sous forme d'un micro-contôleur ou d'un processeur par exemple de type ARM 940, LEON, ou SPARC. Ce dernier peut également avoir pour fonction, notamment celles d'effectuer des calculs et de gérer des interruptions. L'architecture de réseau sur puce suivant l'invention peut être dotée d'un, voire éventuellement de plusieurs contrôleurs de réseau.

Chacune des ressources 114 peut être de type générique, par exemple sous forme d'un processeur ou d'un DSP (DSP pour Digital Signal Processor ou processeur de signal numérique) ou de type spécifique par exemple sous forme d'un module de traitement spécialisé, par exemple tel qu'un module spécialisé dans le calcul d'une FFT (FFT pour Fast Fourier Transform ou « transformée de Fourier rapide ») ou par exemple tel qu'un module codeur ou/et décodeur MPEG (MPEG pour « moving pictures expert groups ») ou un module de mémorisation par exemple de type SRAM (SRAM pour « static random access memory » ou mémoire vive statique)

Chaque ressource 114 de la structure de réseau comporte une partie ou des moyens que l'on appellera « coeur fonctionnel », dédiée notamment aux traitements de données ou/et aux calculs, ainsi qu'une autre partie ou des moyens que l'on nommera « interface réseau », et qui permet à la ressource 114 de communiquer avec le réseau.

Un exemple de structure détaillée d'une ressource 200 et plus particulièrement des moyens formant une interface réseau 202 de la ressource sont représentés sur la figure 2.

Cette interface réseau 202 comprend tout d'abord un module 212, permettant de décoder des commandes reçues en entrée de la ressource 200, et provenant d'autres ressources ou d'un contrôleur de réseau. Parmi ces commandes peuvent figurer notamment, des commandes de lecture ou d'écriture de données. Des commandes d'émission de données spéciales que l'on nommera « crédits », et qui proviennent d'autres ressources, des commandes d'initialisation de communications provenant du contrôleur du réseau, ou des programmations ou configurations provenant du contrôleur du réseau et permettant de paramétrer le fonctionnement de certains modules de la ressource 200 peuvent également être reçues.

Un module dit « de gestion de configuration » 214 de l'interface réseau 202 est prévu quant à lui pour réceptionner différentes programmations ou « configurations » destinées à paramétrer le fonctionnement de l'interface réseau 202 ou/et du coeur fonctionnel (non représenté) de la ressource 200. Ces configurations ou programmations peuvent être stockées en mémoire de la ressource 200 dans des registres appartenant à des unités ou blocs de calcul notés 204, 206, 208.

En fonction de commandes ou d'instructions envoyées par le contrôleur de réseau, ou/et d'étiquettes comprises dans des données provenant d'autres ressources du réseau, le module 214 peut permettre également de décider de l'utilisation d'une ou de plusieurs configurations courante(s) parmi lesdites configurations stockées dont la ressource 200 dispose en mémoire.

A l'aide par exemple d'un type de configuration que l'on nommera «configuration de gestion de crédits », le module de gestion de configuration 214 peut permettre notamment de paramétrer le fonctionnement d'un module de l'interface réseau 202 appelé module contrôleur d'informations entrantes ou « ICC » (ICC pour « Input Communication Contrôler » selon la terminologie anglo-saxonne) et noté 218.

Le module contrôleur d'informations entrantes 218 est associé à un ou plusieurs moyens de stockage en entrée, d'où transiteront des données entrantes de la ressource. Ces moyens de stockage peuvent se présenter par exemple sous forme d'une ou plusieurs unités FIFO, par exemple de deux unités FIFO notés 225 et 226, ou d'une ou plusieurs mémoires, dont le module contrôleur d'informations entrantes est susceptible de connaître le taux de remplissage ainsi que les adresses libres.

En fonction de la manière dont il est paramétré, le module contrôleur d'informations entrantes 218 permet notamment à la ressource 200 de transmettre des données spéciales appelées « crédits » à d'autres ressources du réseau, selon un mécanisme d'émission de crédits, servant à synchroniser les communications dans le réseau.

Un tel mécanisme prévoit qu'une première ressource, lorsqu'elle est destinée à recevoir des données à traiter ou à transmettre qui proviennent d'une seconde ressource, envoie préalablement des crédits vers la seconde ressource pour signifier à cette dernière qu'elle est autorisée à envoyer lesdites données à traiter ou à transmettre, conformément à ce qui est indiqué par une configuration de gestion de crédits courante que la première ressource utilise.

Le nombre de crédits envoyé par la première ressource pourra permettre d'indiquer à la seconde ressource, la quantité de données que cette seconde ressource est autorisée à envoyer vers la première ressource. Ce nombre de crédits dépend de la place libre dont la première ressource dispose en entrée, ainsi que de la quantité de données que la première ressource est censée recevoir de la part de la seconde ressource. Comme cela a été décrit auparavant, cette quantité de données est indiquée dans la configuration de gestion de crédits courante que la première ressource utilise.

Une fois qu'elle est autorisée à émettre grâce à la réception de crédits, la seconde ressource est susceptible d'émettre autant de données que le nombre de crédits envoyés par la première ressource le lui permet. Ainsi, l'envoi de crédits de la première ressource vers la seconde ressource permet l'ouverture d'un chemin pour des données provenant de la seconde ressource et destinées à la première ressource. Ce mécanisme d'envoi de crédits permet d'assurer qu'une donnée émise par la seconde ressource sera correctement réceptionnée par la première ressource.

A l'aide d'un autre type de configuration que l'on nommera « configuration de gestion de données », le module de gestion de configuration 214 peut permettre notamment de paramétrer le fonctionnement du coeur fonctionnel (non représenté) de la ressource 200 et en particulier la manière dont ce coeur fonctionnel va traiter les données que la ressource 200 reçoit. Par exemple dans le cas où le coeur fonctionnel est destiné à réaliser un traitement FFT une configuration de gestion de données peut indiquer un nombre de points de calcul à prendre en compte pour effectuer ce traitement.

Les données à traiter émises d'une seconde ressource vers une première ressource se présentent sous forme d'un ensemble de blocs ou de paquets, dans lesquels figurent, par exemple en en-tête, une ou plusieurs étiquettes (tag selon la terminologie anglo-saxonne). Ces étiquettes, peuvent permettre notamment d'attribuer une identification à plusieurs voire chacun desdits blocs ou desdits paquets de données. De cette manière, la première ressource peut réaliser un ordonnancement des paquets qu'elle reçoit, ou identifier le début d'un nouveau calcul ou d'un nouveau traitement à effectuer. Lesdites étiquettes peuvent également comporter un ou plusieurs repères permettant d'indiquer à la première ressource recevant des données provenant de la seconde ressource, la configuration courante de gestion de données que cette première ressource doit adopter pour traiter lesdites données.

A l'aide desdites « configuration de gestion de données », le module de gestion de configurations 214 peut en outre paramétrer le fonctionnement d'un autre module de l'interface réseau appelé contrôleur d'informations sortantes ou « OCC » (OCC pour « Output Communication Contrôler » selon la terminologie anglo-saxonne) et noté 220.

Le module contrôleur d'informations sortantes 220 est associé à un ou plusieurs moyens de stockage en sortie, d'où transiteront des données sortantes de la ressource 200. Ces moyens de stockage peuvent se présenter sous forme d'une ou plusieurs unités FIFO, par exemple de deux unités FIFO 228 et 229, ou d'une ou plusieurs mémoires à accès séquentiel en écriture et aléatoire en lecture, ou d'une ou plusieurs mémoires dont le module contrôleur d'informations sortantes pourra connaître le taux de remplissage et les adresses libres.

Le module contrôleur d'informations sortantes 220 peut être prévu notamment pour, en fonction de la manière dont il est paramétré, créer des paquets de données à transmettre vers une ou plusieurs autres ressources réceptrices et dans lesquelles figurent des étiquettes. Le système d'étiquettes permet d'indiquer à une ressource et notamment à la ressource 200 recevant des paquets de données vers quelle(s) ressource(s) ré-émettre ces paquets de données. Ainsi, les étiquettes en en-tête d'un paquet de données peuvent comporter un ou plusieurs autres repères permettant d'indiquer à une ressource, la destination que prendront les données que cette dernière aura traité.

L'interface réseau 202 comprend également un port d'entrée 222 et un port de sortie 224. Ces ports 222 et 224 permettent respectivement de diriger des données ou des crédits arrivant en entrée de la ressource 200 vers les différents modules de cette dernière, et d'arbitrer l'émission des données ou des crédits en sortie de la ressource 200.

Une structure de ressource appartenant à un réseau sur puce mis en oeuvre suivant l'invention, peut permettre de traiter plusieurs flux de données entrant provenant de différentes ressources du réseau. Cette gestion peut être faite de manière séquentielle ou bien simultanée et dépendra d'un nombre de moyens récepteurs, par exemple sous forme d'unités FIFO (FIFO pour « First In First Out » ou premier entré premier sorti), dont ladite ressource dispose en entrée.

De même, une ressource appartenant à un réseau sur puce mis en oeuvre suivant l'invention peut permettre de traiter plusieurs flux de données sortant destinés à des ressources différentes. Cette gestion peut être faite de manière séquentielle ou bien simultanée, et dépendra d'un nombre de moyens émetteurs par exemple sous forme d'unités FIFO (FIFO pour « First In First Out » ou premier entré premier sorti), dont ladite ressource dispose en sortie.

Selon plusieurs variantes possibles de mise en oeuvre d'une structure de réseau sur puce suivant l'invention, la gestion des flux de données et des flux de crédits peut être identique pour toutes les ressources du réseau, ou différer d'une ressource à l'autre.

On peut avoir par exemple dans un même réseau, au moins une première ressource avec une seule unité FIFO en entrée et une seule unité FIFO en sortie, apte à traiter au moins deux flux séquentiels en entrée et apte à générer au moins deux flux séquentiels en sortie, vers au moins deux ressources différentes. On peut également avoir dans ce même exemple de réseau au moins une seconde ressource avec deux unités FIFO en entrée et une unité FIFO en sortie, apte à traiter deux flux concurrents en entrée et générer deux flux séquentiels en sortie. Selon ce même exemple, on peut également avoir une troisième ressource avec deux unités FIFO en entrée et deux unités FIFO en sortie apte à traiter deux flux concurrents en entrée et deux flux concurrents en sortie.

Le module de gestion de configuration 214 de la ressource 200 peut permettre également de paramétrer le fonctionnement d'un autre module noté 216, qui permet de générer des interruptions destinées notamment à un contrôleur de réseau, et éventuellement au coeur fonctionnel (non représenté) de la ressource 200. Parmi les interruptions que ce module de gestion d'interruptions 216 est susceptible de produire peuvent figurer des interruptions que l'on nommera « informatives », et qui permettent par exemple d'avertir le contrôleur de réseau que la ressource 200 a terminé une action ou un traitement.

Il peut être prévu par exemple que le module de gestion d'interruptions 216 envoie une interruption vers le contrôleur du réseau lorsque la ressource 200 a terminé tous les traitements de données qu'elle devait effectuer.

Il peut être également prévu que le module de gestion d'interruptions 216 de la ressource 200, génère une interruption destinée au contrôleur de réseau lorsque la ressource 200 a terminé d'émettre tous les crédits destinés à une autre ressource (non représentées sur la figure) susceptible de lui envoyer des données, ou lorsque la ressource 200 a fini d'émettre tous les crédits destinés à toutes les autres ressources (non représentées sur la figure) susceptibles de lui envoyer des données.

Le module de gestion d'interruption 216 peut être prévu également pour émettre une interruption en cas de détection par la ressource 200 d'une erreur, ou d'une information que cette dernière est incapable de traiter.

Par exemple, dans le cas où les repères d'une étiquette comprise dans un paquet de données reçu par la ressource 200, ne correspondent à aucune des configurations de gestion de données dont cette ressource dispose, il peut être prévu que la ressource 200 émette une interruption vers le contrôleur de réseau pour que ce dernier prenne en charge le traitement dudit paquet de données

Selon un autre exemple, dans un cas où la ressource 200 effectue un traitement par exemple le calcul d'une transformée de Fourier, le module de gestion d'interruption 216 peut être prévu pour générer une interruption destinée au contrôleur de réseau lorsqu'une saturation au niveau du traitement est détectée, ainsi qu'une autre interruption au coeur fonctionnel, afin que ce dernier arrête le traitement en cours.

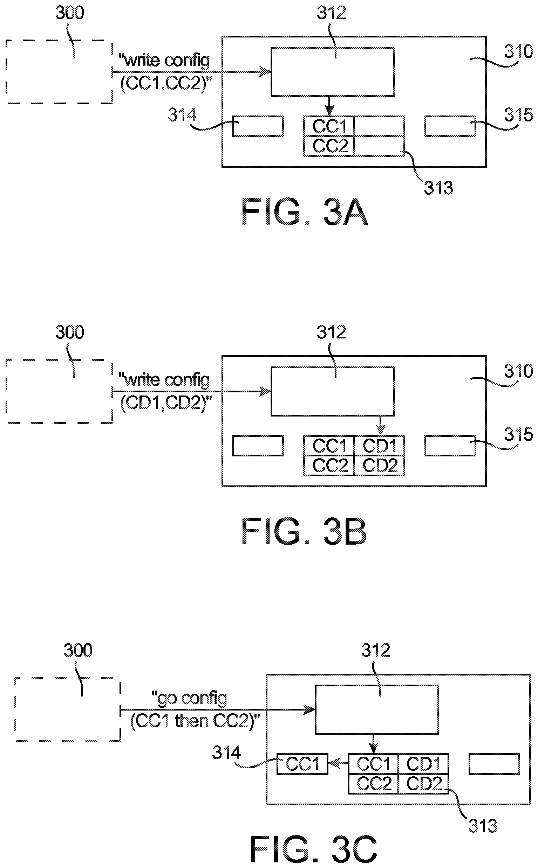

En liaison avec les figures 3A-3M, un exemple de fonctionnement d'une architecture de réseau sur puce suivant l'invention, et en particulier celui d'une ressource donnée du réseau que l'on notera 310, va à présent être décrit. Le réseau est utilisé dans cet exemple, dans le cadre du traitement d'un flot de données.

Selon une première phase, préalablement au début dudit traitement, un contrôleur du réseau noté 300 envoie tout d'abord, à chacune des ressources du réseau et notamment à la ressource 310, un ensemble de configurations. Ces configurations sont des programmations aussi bien destinées au coeur fonctionnel qu'à l'interface réseau des ressources, et que ces dernières seront susceptibles d'utiliser au cours dudit traitement.

Une configuration peut être envoyée par le contrôleur de réseau 300 sous forme de paquets de données spéciaux. Ces paquets de données spéciaux peuvent être formés d'un en-tête, comportant un champ indiquant à une ressource recevant la configuration, dans lequel(s) de ses registre(s) cette configuration sera stockée.

Chaque ressource reçoit un ensemble de configurations qui lui est propre. Parmi un ensemble de configurations qu'une ressource, est susceptible de recevoir, peut figurer une ou plusieurs configurations d'un type que l'on nommera de « gestion de crédits ».

Les configurations de gestion de crédits ont pour rôle notamment d'assurer la synchronisation des communications entre les différentes ressources du réseau, en plus de celui de permettre d'éviter une saturation du réseau. Les configurations de gestion de crédits sont des programmations utilisables par l'interface réseau d'une ressource et qui permettent d'indiquer à ladite interface la manière de gérer les flux de données entrant dans ladite ressource.

Ainsi, le contrôleur de réseau 300 envoie par exemple lors d'une première étape, une instruction notée « write config (CC1, CC2) » comportant deux programmations ou configurations de gestion de crédits différentes « CC1 » et « CC2 » vers la ressource 310. La ressource 310 décode alors cette instruction par l'intermédiaire de son module décodeur 312 puis stocke les configurations « CC1 » et « CC2 » par l'intermédiaire de son module de gestion des configurations 313 (figure 3A).

Dans une configuration de gestion de crédits, par exemple dans la configuration de gestion de crédits « CC1 » peut être notamment indiquée l'identité d'une ressource que l'on nommera « première ressource émettrice » et qui est destinée à émettre des données vers la ressource 310. L'identité de la première ressource émettrice peut être indiquée de manière directe, par exemple à l'aide d'un numéro d'identité, ou de manière indirecte, par exemple par une indication du chemin menant à cette première ressource émettrice. Dans la configuration de gestion de crédits « CC1 », est également indiquée pour la ressource 310, un nombre crédits à envoyer vers la première ressource émettrice. Ce nombre de crédits correspond à une quantité de données que la première ressource émettrice, sera autorisée à émettre vers la ressource 310. Un registre d'envoi de crédits appartenant au contrôleur d'informations sortantes 220 à sélectionner, ainsi qu'un seuil pour l'envoi de crédits, c'est-à-dire un nombre places libres minimum en FIFO 228 ou/et 229 disponibles en vue de l'envoi de crédits peuvent également être indiqués dans une telle configuration de gestion de crédits.

Plusieurs autres ressources peuvent être destinées à envoyer des données vers la ressource 310, et notamment par exemple une seconde ressource émettrice. La ressource 310 peut disposer d'autres configurations de gestion de crédits, par exemple de la configuration « CC2 » pour lui permettre de gérer les flux de données provenant de la seconde ressource émettrice.

Les différentes configurations de gestion de crédits « CC1 » et « CC2 » dont la ressource donnée 310 dispose, pourront être utilisées par cette ressource 310 selon un ordre ou une séquence préétablie par le contrôleur de réseau 300.

Selon plusieurs possibilités, en fonction dont l'architecture de la ressource 310 a été mise en oeuvre, et notamment en fonction de ses moyens de stockage en entrée, par exemple en fonction du nombre d'unités FIFO en entrée associées au contrôleur d'informations entrantes 314 de la ressource 310, il peut être prévu que cette ressource 310 puisse utiliser, parmi l'ensemble des configurations de gestion de crédits dont elle dispose, une seule configuration de gestion de crédit à la fois pour une ou plusieurs FIFO en entrée, ou bien plusieurs configurations de gestion de crédits simultanément.

Par ailleurs, selon un mode d'implémentation différent de celui qui vient d'être décrit pour les configurations « CC1 » et « CC2 », il peut être prévu qu'une configuration de gestion de crédits donnée concerne un envoi de crédits destiné à plusieurs ressources « émettrices » au lieu d'une seule.

Parmi les configurations que le contrôleur de réseau envoie à la ressource 310, figure également une ou plusieurs configurations de type que l'on nommera « de gestion de données ». Une configuration de gestion de données est une programmation utilisable à la fois par le coeur fonctionnel et par l'interface d'une ressource. Ce type de configuration comprend une partie permettant d'indiquer au coeur fonctionnel d'une ressource la manière dont ce coeur aura à traiter des données entrantes dans la ressource, et d'autre part à l'interface réseau de cette même ressource, la destination que prendront les données, par exemple une fois que ces données auront subi un traitement.

Ainsi, le contrôleur de réseau 300 envoie par exemple, lors d'une deuxième étape, une instruction notée « write config (CD1, CD2) » comportant deux programmations ou configurations de gestion de données différentes « CD1 » et « CD2 » vers la ressource 310 (figure 3B).

Dans une des configurations de gestion de données que la ressource 310 reçoit, par exemple dans la configuration « CD1 », peut être indiquée notamment l'identité d'une ressource que l'on nommera « première ressource réceptrice » et qui est destinée à recevoir des données de la ressource 310.

L'identité de la première ressource réceptrice peut être indiquée de manière directe, par exemple à l'aide d'un numéro d'identité, ou de manière indirecte, par exemple par une indication du chemin menant à cette ressource réceptrice. Dans la configuration « CD1 » peut être également indiquée pour la ressource 310, un nombre de données à envoyer vers la ressource première ressource réceptrice. Un registre de données à sélectionner, c'est-à-dire par exemple une unité FIFO en entrée de la ressource réceptrice ou un registre de configuration de la ressource réceptrice à sélectionner, ainsi qu'un seuil pour l'envoi de données, c'est-à-dire un nombre minimum de données présentes en unité FIFO 228 ou/et 229 avant l'envoi d'un paquet de données peuvent également être indiqués dans une telle configuration de gestion de données.

Plusieurs autres ressources peuvent être destinées à recevoir des données de la ressource 310 et notamment une seconde ressource réceptrice que l'on notera 350. La ressource 310 peut ainsi disposer d'autres configurations de gestion de données, par exemple de la configuration « CD2 », pour lui permettre de gérer des flux de données en direction de cette seconde ressource réceptrice 350.

Selon plusieurs possibilités, en fonction dont l'architecture de la ressource 310 a été mise en oeuvre, et notamment en fonction du nombre d'unités FIFO associées au contrôleur d'informations sortantes 315 de la ressource 310, il peut être prévu que cette dernière puisse utiliser, parmi l'ensemble des configurations de gestion de données dont elle dispose, une seule configuration de gestion de données à la fois, ou plusieurs configurations de gestion de données simultanément.

Par ailleurs, un mode d'implémentation différent de celui qui vient d'être décrit pour les configurations de gestion de données « CD1 » et « CD2 », et dans lequel une configuration de gestion de données concerne un envoi de données vers plusieurs ressources « réceptrices » au lieu d'une seule, peut être prévu.

L'ensemble des différentes configurations de gestion de données « CD1 » et « CD2 », dont la ressource 310 dispose seront par ailleurs utilisées par cette ressource 310 selon un ordre ou une séquence établi par un mécanisme d'étiquettes que l'on décrira ultérieurement.

Une fois les configurations de gestion de crédits et de gestion de données envoyées par le contrôleur de réseau, peut débuter une seconde phase de fonctionnement du réseau, lors de laquelle les différentes ressources communiquent entre elles et effectuent chacune une partie du traitement du flot de donnée.

Cette seconde phase est initialisée par le contrôleur de réseau par envoi d'une commande de démarrage. L'ordre avec lequel les ressources reçoivent cette commande de démarrage peut être quelconque. Cette commande de démarrage indique à une ressource la recevant de débuter des communications avec une ou plusieurs autres ressources du réseau. Cette commande peut comporter également une programmation ou configuration que l'on nommera « configuration d'enchaînement ». Une configuration « d'enchaînement » permet d'établir un ordre ou une séquence selon laquelle une ressource utilisera les différentes configurations de gestion de crédits dont elle dispose. Une ressource donnée recevant une telle configuration d'enchaînement, pourra changer automatiquement de configuration de gestion de crédits au cours d'un traitement. Ainsi, une ressource donnée ayant, au cours d'un traitement, utilisé jusqu'à terme ou épuisement de crédits une configuration de gestion de crédits courante, pourra connaître la configuration de gestion de crédits suivante à utiliser et se servir de cette configuration de gestion de crédits suivante comme configuration de gestion de crédits courante.

Selon un premier exemple, la ressource 310 pourrait recevoir de la part du contrôleur de réseau 300 une configuration d'enchaînement lui signifiant d'utiliser k fois de suite (avec k un entier) la configuration de gestion de crédit « CC1 ».

Selon un autre exemple, la ressource 310 pourrait recevoir une configuration d'enchaînement lui signifiant d'utiliser k fois de suite (avec k un entier) la configuration de gestion de crédit « CC1 » puis m fois (avec m un entier) la configuration « CC2 ».

Selon un troisième exemple, la ressource 310 pourrait recevoir une configuration d'enchaînement lui signifiant d'utiliser les configurations « CC1 » puis « CC2 » n fois de suite, (avec n un entier).

Selon un quatrième exemple, la ressource 310 pourrait recevoir une configuration d'enchaînement lui signifiant d'utiliser indéfiniment la configuration « CC1 ».

La figure 3C représente un cas, donné à titre d'exemple, où la ressource 310 reçoit une instruction notée « go CC1 then CC2 ». Cette instruction comporte un ordre de démarrage des communications pour la ressource 310, ainsi qu'une configuration d'enchaînement signifiant à la ressource 310 d'utiliser la configuration de gestion de crédits « CC1 » puis la configuration de gestion de crédits « CC2 ».

Une telle instruction est tout d'abord décodée par le module décodeur 312 de la ressource 310 et transmise au module de gestion des configurations 313, qui décide de charger la première configuration « CC1 » de gestion de crédit sélectionnée dans le contrôleur d'informations entrantes 314. Cela se traduit par le chargement dans un décompteur du contrôleur d'informations entrantes 314 du nombre total de crédits figurant dans la configuration « CC1 », et dans des registres locaux de ce contrôleur d'informations entrantes 314, des autres informations de cette configuration « CC1 ».

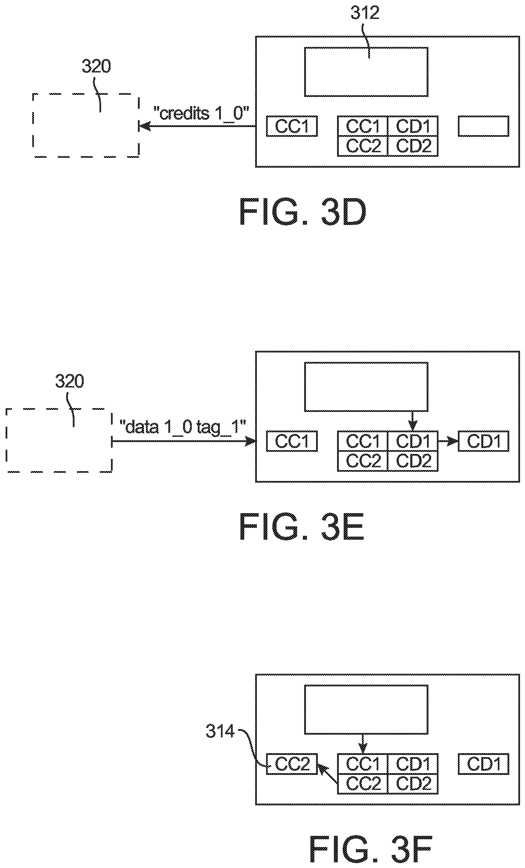

Le contenu de l'unité FIFO d'entrée associée à la configuration « CC1 » est ensuite scruté. En fonction de la place disponible dans cette unité FIFO, d'un seuil d'envoi des crédits, le contrôleur d'informations décide de l'envoi d'un ou plusieurs premiers paquets de crédits notés « credits 1_0 » vers ladite première ressource émettrice notée 320 (figure 3D). Pour cela, le contrôleur d'informations crée un paquet d'en-tête en utilisant les informations de chemin, de seuil d'envoi de crédits et de registre(s) de destination inscrits dans la configuration « CC1 ». En parallèle, le nombre de crédits total disponible à envoyer vers la première ressource émettrice 320 est décrémenté et le nombre de crédits envoyés vers la première ressource émettrice 320 est incrémenté.

La première ressource émettrice 320 reçoit alors le paquet de crédits « credits 1_0 » et ajoute ces crédit dans un de ses registres conformément à ce qui est indiqué dans le paquet de crédits « credits 1_0 » reçu.

Cette première ressource émettrice 320 aura préalablement reçu une configuration de gestion de données dans laquelle est notamment indiquée, un registre ou une unité FIFO à utiliser pour permettre l'envoi de données. En fonction de sa configuration de gestion de données et des données disponibles dont la première ressource émettrice 320 dispose, cette dernière peut alors décider de l'envoi d'un ou plusieurs premiers paquets de données « data 1_0 » vers la ressource 310.

Lorsque la ressource 310 reçoit les données « data 1_0 », le nombre de crédits que cette ressource 310 est apte à envoyer à la première ressource émettrice 320 est alors décrémenté. L'émission d'un ou plusieurs nouveaux paquets de crédits est alors déclenchée. Ce mécanisme d'émission de crédits/réception de données en fonction desdits crédits, se poursuit alors jusqu'à épuisement du total de crédits inscrit dans la configuration « CC1 ».

En ce qui concerne les données « data 1_0 » émises de la première ressource émettrice 320 vers la ressource donnée 310, ces données peuvent être sous forme d'un ensemble de paquets, dans lesquels figurent, par exemple en en-tête, au moins une étiquette (tag selon la terminologie anglo-saxonne) notée « tag_1 ». Cette étiquette tag_1 permet d'indiquer à la ressource donnée 310 recevant les données provenant de la première ressource émettrice 320, la configuration courante de gestion de données parmi les configurations « CD1 » et CD2 » que la ressource 310 doit adopter notamment pour traiter lesdites données. Ainsi L'étiquette « tag_1 » permet d'indiquer à la ressource 310, la manière dont cette dernière doit traiter les données et notamment les données data 1_0 qu'elle reçoit, ainsi que la destination de ces données une fois qu'elles auront été traitées.

L'étiquette « tag_1 » comporte une commande spéciale indiquant la configuration de gestion de données courante, par exemple la configuration « CD1 », à utiliser pour traiter le ou les paquets de données émis par la première ressource 320. La configuration de gestion de données « CD1 » du coeur et des communications sortantes sont alors chargées dans des registres locaux de la ressource 310 (figure 3E). Au niveau des communications sortantes de la ressource 310, les registres locaux du contrôleur d'informations sortantes 315 sont chargés avec les informations du total de données, seuil d'envoi de données et registre ou unité FIFO associé au contrôleur d'informations sortantes 315 pour l'envoi de données.

La ressource 310 effectue alors un traitement sur les données data 1_0 émises par la première ressource émettrice 320. Le coeur fonctionnel de la ressource 310 effectue ce traitement, selon un mode indiqué par la configuration de gestion de données « CD1 ».

Lorsque le nombre total de crédits inscrit dans la configuration « CC1 » a été émis vers la première ressource émettrice 320, la seconde configuration de gestion de crédit « CC2 » est alors chargée de manière automatique et sert de configuration de gestion de crédits courante (figure 3F), conformément à ce qu'a indiqué la configuration d'enchaînement des configurations que la ressource 310 a reçu de la part du contrôleur de communication 300 lors de l'étape décrite précédemment en liaison avec la figure 3C.

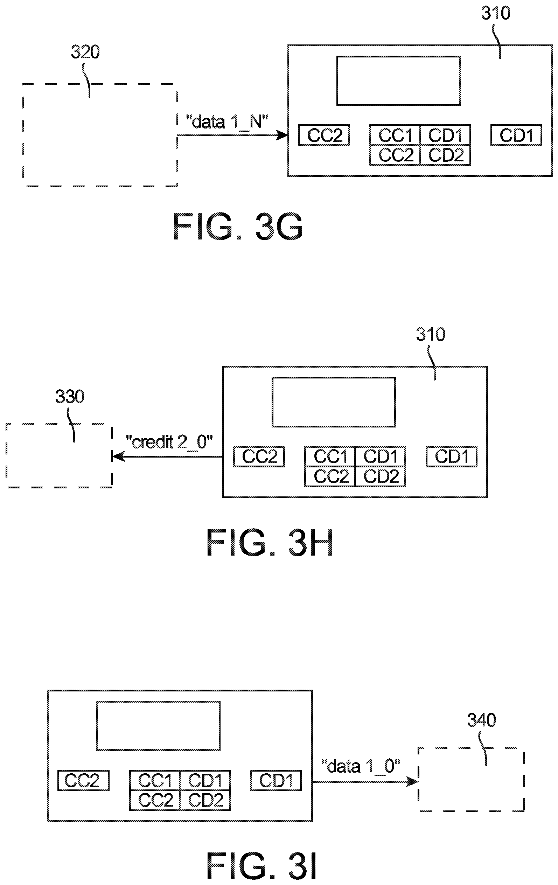

La première ressource émettrice 320 termine ensuite l'envoi des dernières données « data 1_N » qu'elle devait émettre vers la ressource 310 (figure 3G). Une nouvelle configuration de gestion de données courante pourra être chargée et utilisée par la ressource 310 dès lors que cette dernière recevra une nouvelle étiquette.

La ressource 310 débute ensuite un envoi de crédits « crédits 2_0 » vers la deuxième ressource émettrice 330, conformément à ce qu'indique la nouvelle configuration de gestion de crédits courante « CC2 » chargée par la ressource 200 (figure 3H).

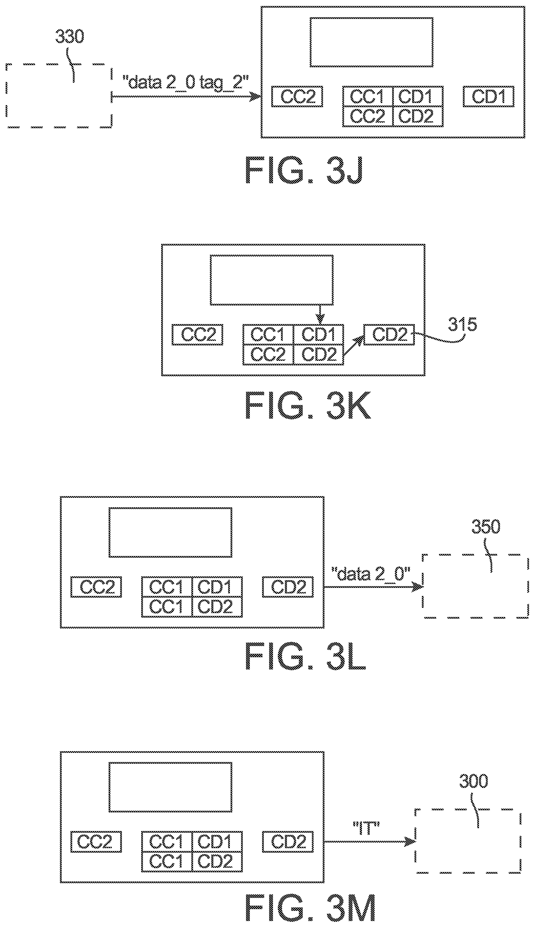

Des données data 1_0 provenant initialement de la première ressource émettrice 320 et sur lesquelles la ressource 310 aura éventuellement effectué un traitement, sont alors émises vers une première ressource réceptrice 340, selon un mode conforme à ce qui est indiqué dans la configuration de gestion de données « CD1 » servant de configuration de gestion de données courante (figure 3I).
La ressource 310 reçoit ensuite, en réponse aux crédits « credits 2_0 », des données « data 2_0 » provenant de la deuxième ressource émettrice 330, avec en en-tête de ces données, une étiquette « tag_2 » indiquant à la ressource 310 de changer de configuration de gestion de données, et par exemple d'utiliser la configuration « CD2 » (figure 3J). La configuration de gestion de données « CD2 » pourra être utilisée comme configuration de gestion de données courante dès lorsque la configuration de gestion de données « CD1 » se termine. La ressource 310 envoie alors (selon une étape non représentée) conformément à la configuration de gestion de données courante « CD1 », des dernières données « data 1_N » ayant subies ou non un traitement, à destination de la première ressource réceptrice 340.

La seconde ressource émettrice 330, quant à elle envoie (selon une étape non représentée) éventuellement dans le même temps des données vers la ressource 310.

Puis, dès lors que les dernières données data 1_0 destinées à la première ressource réceptrice 340 sont émises, la configuration de gestion de données courante utilisée par la ressource 310, peut alors changer. Une autre configuration de gestion de données « CD2 » peut être alors chargée dans le contrôleur d'informations sortantes 315 de la ressource et utilisée par cette dernière (figure 3K).

Alors, conformément à ce qui est indiqué dans la configuration de gestion de données « CD2 » utilisée par la ressource 310, cette dernière émet des données « data 2_0 » qu'elle vient éventuellement de traiter vers une seconde ressource réceptrice 350 (figure 3L).

Une fois que la ressource 310 a reçu toutes les données qu'elle devait traiter, et a émis toutes les données qu'elle devait transmettre elle peut s'arrêter de fonctionner et éventuellement envoyer une interruption « IT » destinée au contrôleur de réseau 300 (figure 3M).

Selon une variante, l'envoi de l'interruption destinée au contrôleur de réseau 300 peut être fait une fois que la ressource 310 a utilisé toutes les configurations de gestions de crédits qu'elle était censée utiliser, conformément à ce que lui avait indiqué la configuration d'enchaînement envoyée par le contrôleur de réseau.

Le traitement du flot de données peut être arrêté dès lors que la dernière des ressources du réseau à laquelle il restait des données à traiter émet une interruption destinée au contrôleur de réseau.

Durant la seconde phase de fonctionnement des émissions d'interruptions de la ressource 310 vers le contrôleur de réseau peuvent survenir, dans le cas par exemple où cette ressource 310 détecte une erreur ou reçoit une étiquette ne correspondant pas aux configurations dont elle dispose.

Ainsi, dans le fonctionnement qui vient d'être décrit, le traitement du flot de données dans la deuxième phase est donc susceptible d'être effectué de manière automatique sans interruption et asynchrone, sans d'une part que le contrôleur du réseau intervienne, et sans d'autre part qu'une synchronisation au moyen d'une horloge soit obligatoire.

Par ailleurs, la programmation des communications étant indépendante de la programmation du traitement des données, un système tel que précédemment décrit peut permettre de faire au maximum se chevaucher ou coïncider les intervalles de temps durant lesquels une ressource effectue des traitements et les intervalles de temps durant lesquels cette même ressource communique avec les autres ressources.

Un exemple d'application par une telle structure de réseau peut être le traitement de trames de télécommunications de norme de quatrième génération tel que le MC-CDMA (MC-CDMA pour « multi-carrier Code Division Multiple Access » ou CDMA multi-antennes).

Pour ce type d'application, le contrôleur du réseau peut être un processeur adapté à des prises de décisions complexes. Le traitement d'une trame par un réseau sur puce mis en oeuvre suivant l'invention pourra alors être le suivant :
En réception de la trame, un premier mode de fonctionnement, lors duquel le réseau effectue le décodage de l'en-tête de la trame peut être adopté. Pour cela, l'ensemble des ressources du réseau est alors tout d'abord configuré par le contrôleur de réseau de manière spécifique pour pouvoir traiter un décodage d'en-tête de trame.

Une première ressource peut être dédiée par exemple au repérage du début de la trame et à la transmission automatique de l'en-tête vers une autre ressource. Le reste de la trame est alors envoyé vers une ressource jouant le rôle de mémoire.

A la fin du décodage de l'en-tête, la ressource ayant l'information finale complètement décodée émet une interruption vers le contrôleur de réseau pour lui signifier que le décodage est accompli.

Selon une seconde phase de fonctionnement, le reste de la trame est décodée en fonction des informations apportées par l'en-tête qui vient d'être décodé.

Le contrôleur de réseau déduit alors de l'information d'en-tête, des nouvelles configurations de gestion de crédits et de calcul pour certaines ou éventuellement chacune des ressources du réseau. Ledit contrôleur envoie alors ces configurations via le réseau aux interfaces de chacune des ressources.

Après avoir reconfiguré les ressources, le contrôleur de réseau envoie ensuite un ordre de démarrage. Dès que l'ordre de démarrage est reçu par les interfaces, le reste du traitement de la trame se déroule de manière automatique. Les différentes ressources effectuent alors chacune un traitement élémentaire et communiquent entre elles pour s'échanger les données traitées ou à traiter de la trame.

En fin de traitement, une interruption est fournie par une des ressources pour avertir le contrôleur de réseau.

Une structure de réseau puce mise en oeuvre pour une telle application pourra utiliser plusieurs variantes d'architecture interface réseau suivant l'invention.

Ainsi, certaines ressources de la structure de réseau peuvent être mises en oeuvre pour pouvoir recevoir de manière séquentielle des flux de données provenant de plusieurs autres ressources. Ce peut être le cas par exemple de ladite mémoire.

Certaines ressources de la structure de réseau peuvent être mises en oeuvre pour pouvoir recevoir de manière parallèle ou simultanée des flux de données provenant de plusieurs autres ressources. Ce peut être le cas par exemple d'une ressource d'estimation de canal qui reçoit des données comprenant des paramètres de traitement ou calcul provenant d'une ressource et des données comprenant des données à traiter ou à calculer provenant d'une autre ressource.

Certaines ressources de la structure de réseau peuvent être mises en oeuvre pour émettre de manière parallèle ou simultanée des flux de données vers plusieurs autres ressources. Ce peut être le cas par exemple da la ressource dite « de réception » qui partage le flux de données qu'elle reçoit entre une première ressource de décodage et ladite ressource servant de mémoire.

Certaines ressources peuvent être mises en oeuvre pour émettre de manière séquentielle des flux de données vers plusieurs autres ressources. Ce peut être le cas par exemple d'une ressource permettant de réaliser un traitement OFDM (OFDM pour « orthogonal frequency division multiplexing » ou multiplexage par répartition orthogonale de la fréquence ») qui partage ses sorties entre une ressource permettant d'effectuer une estimation de canal et une ressource permettant d'effectuer une correction de canal.

### Documents cités

[1] : Christopher J. Glass and Lionel M. Ni; "The Turn Model for Adaptive Routing"; Advanced Computer Systems Laboratory, Department of Computer Science, 19th annual Symposium on Computer Architecture, May 19-21, 1992, 1992, pages 278-287.
[2] : Xiola Lin, Philipp K. Mckinley and Lionel M. Ni, "The Message Flow Model for Routing in Wormhole-Routed Networks", IEEE Transactions on Parallel and Distributed Systems, vol. 6, n°7, july 1995, pages 755-760.
[3] : Khalid M. Al-Tawil et al, « A Survey and Comparison of Wormhole Routing Technique in Mesh Networks » King Fahd University of Petroleum and Minerais, IEEE Network, March/April 1997, pages 38-45.

## Revendications

1. Procédé de traitement de données dans un réseau sur puce formé d'une pluralité de ressources (310,320,330,340,350) aptes à communiquer entre elles et à effectuer des traitements, et d'au moins contrôleur de réseau (300) apte à initialiser les communications dans le réseau, le procédé comprenant :
- la réception et le stockage en mémoire par une première ressource de plusieurs configurations de gestion de crédits envoyées par le contrôleur de réseau
- la réception par la première ressource d'une instruction de sélection séquentielle de configurations de gestions de crédit envoyée par le contrôleur de réseau,
- la sélection d'une configuration de gestion de crédits courante parmi plusieurs configurations de gestion de crédits différentes stockées en mémoire de la première ressource,
- une première étape de communications entre au moins une première ressource (310) et au moins une seconde ressource (320), ladite étape de communication comprenant :
a) au moins une émission par la première ressource (310) d'une première pluralité de crédits à destination de la seconde ressource (320), la destination des crédits et le nombre de crédits émis par la première ressource (310) étant définie dans ladite configuration de gestion de crédits courante que la première ressource utilise, la configuration de gestion de crédits courante ayant été sélectionnée conformément à ladite instruction de sélection séquentielle,
b) au moins une réception par la première ressource (310) d'une première pluralité de données à traiter envoyées par la seconde ressource (320), l'envoi par la seconde ressource de données à traiter à destination de la première ressource étant autorisé suite à une réception par la seconde ressource de crédits émis par la première ressource.

2. Procédé selon la revendication 1, le procédé comprenant une deuxième étape de communication entre ladite première ressource et ladite seconde ressource ou une troisième ressource (330), ladite deuxième étape de communication comprenant :
a') au moins une émission par la première ressource (310) d'une deuxième pluralité de données spéciales ou « crédits » à destination de la seconde (320) ou de la troisième ressource (330),
b') au moins une réception par la première ressource (310) d'une deuxième pluralité de données à traiter envoyées par la seconde (320) ou la troisième ressource (330).

3. Procédé selon l'une des revendications 1 ou 2, la première ressource (310) traitant au moins une partie des données à traiter envoyées par la seconde (320) ou la troisième ressource (330).

4. Procédé selon l'une des revendications 1 à 3, la première ressource (310) envoyant, à une quatrième ressource (340), suite à la réception de la première et/ou de la deuxième pluralité de données à traiter, des données à traiter et/ou des données traitées par la première ressource (310).

5. Procédé selon la revendication 2, comportant, avant l'étape a') ou entre les étapes a') et b') ou après l'étape b'), l'envoi, à une quatrième ressource (330), d'au moins une partie des données à traiter reçues par la première ressource (310) au cours de l'étape b) et/ou d'au moins une partie des données reçues par la première ressource au cours de l'étape b) et traitées par la première ressource (310).

6. Procédé selon l'une des revendications 1 à 5, comportant une étape préalable d'envoi à la première ressource (310), par ledit contrôleur de réseau (300), de données de configurations de gestions de données, indiquant un ou plusieurs type de traitement à effectuer sur des données et/ou au moins une autre ressource à laquelle envoyer des données traitées ou à traiter, puis de stockage de ces données de configurations de gestions de données en mémoire de la première ressource.

7. Procédé selon l'une des revendications 1 à 6, la première ressource (310) mémorisant des données de configurations de gestions de données indiquant un ou plusieurs types de traitement à effectuer sur des données et/ou au moins une autre ressource (330) à laquelle envoyer des données traitées ou à traiter.

8. Procédé selon l'une des revendications 6 ou 7, les données à traiter reçues au cours de l'étape b) et/ou au cours de l'étape b') comportant des données dites données d'étiquette comportant des données de sélection de configuration de gestion de données parmi une pluralité de configurations de gestion de données mémorisées.

9. Procédé selon l'une des revendications 1 à 8, lesdites configurations de gestions de crédits stockées en mémoire de la première ressource (310) ayant été envoyées à la première ressource par ledit contrôleur de réseau (300), préalablement à tout échange de données ou de crédits entre des ressources (310,320,330,340) du réseau.

10. Procédé selon l'une des revendications 1 à 9, la quantité de données reçues par la première ressource étant fonction de la quantité de crédits émis par cette première ressource à l'étape a) ou à l'étape a').

11. Procédé selon l'une des revendications 1 à 10, les étapes a) et/ou a') étant précédées d'un envoi, par le contrôleur de réseau d'une instruction de démarrage des communications dans le réseau.

12. Procédé selon l'une des revendications 1 à 11, ladite instruction de sélection séquentielle d'une ou de plusieurs configurations de gestions de crédits, étant comprise dans une instruction de démarrage des communications dans le réseau envoyée avant les étapes a) et/ou a') par le contrôleur de réseau.

13. Procédé selon l'une des revendications 1 à 12, comprenant au moins une étape d'interruption provenant d'une ressource et destinée au contrôleur de réseau.

14. Dispositif de réseau sur puce comprenant au moins une ressource apte à communiquer avec une ou autres plusieurs ressources du réseau et apte à effectuer au moins un traitement de données, ladite ressource comprenant des moyens formant une interface avec le réseau, les moyens formant une interface avec le réseau comportant :
- des moyens de stockage (204, 205, 206) aptes à stocker plusieurs configurations de gestion de crédits, différentes,
- des moyens de sélection de configuration (214) aptes à sélectionner au moins une configuration de gestion de crédits courante parmi lesdites plusieurs configurations de gestion de crédits différentes, la sélection étant effectuée en fonction d'une instruction de sélection séquentielle de configurations de gestions de crédit émise par un contrôleur de réseau prévu pour initialiser les communications dans le réseau,
- des moyens d'émission (218) de crédits aptes à émettre des crédits à destination d'une ou plusieurs ressources du réseau, la destination de crédits destinés à être émis par les moyens d'émission de crédits étant fonction d'une configuration de gestion de crédits sélectionnée par les moyens de sélection de configuration (214),
- des moyens (220) pour autoriser l'émission par des moyens d'émission de données, de données à traiter à destination d'au moins une première ressource desdites autres ressources du réseau suite à la réception, par des moyens de réception de crédits, de crédits provenant de ladite première ressource,
- lesdits moyens de réception de crédits aptes à recevoir des crédits en provenance d'une ou de plusieurs ressources du réseau,
- lesdits moyens d'émission (228, 229) de données à traiter, aptes à émettre des données à traiter à destination d'une ou plusieurs ressources du réseau,
- des moyens de réception (225, 226) de données aptes à recevoir des données à traiter en provenance d'une ou de plusieurs ressources du réseau.

15. Dispositif selon la revendication 14, les moyens formant une interface réseau comprenant en outre :
- des moyens pour autoriser la réception de données en provenance d'au moins une seconde ressource suite à la réception de crédits provenant de ladite seconde ressource.

16. Dispositif selon la revendication 14 ou 15, dans lequel la destination de données que les moyens d'émission de données sont susceptibles d'émettre est fonction d'un type de programmation ou configuration dite de gestion de données,
- lesdits moyens de stockage permettant en outre de stocker plusieurs configurations de gestion de données différentes,
- les moyens de sélection de configuration permettant en outre de sélectionner au moins une configuration de gestion de données courante parmi lesdites plusieurs configurations de gestion de données.

17. Dispositif selon la revendication 16, les moyens de sélection de configuration permettant en outre de sélectionner au moins une configuration de gestion de données courante parmi lesdites plusieurs configurations de gestion de données, en fonction d'au moins une donnée de sélection ou étiquette comprise dans un paquet de données à traiter reçu par lesdits moyens récepteurs de données.

18. Dispositif selon l'une des revendications 16 ou 17, la ressource comprenant en outre des moyens formant un coeur fonctionnel apte à effectuer au moins un traitement de données.

19. Dispositif selon la revendication 18, dans lequel ledit traitement effectué par ledit moyen formant un coeur fonctionnel est fonction d'un type de programmation ou configuration dite de gestion de données, les moyens d'interface réseau comprenant en outre: des moyens aptes à sélectionner au moins une configuration de gestion de données courante parmi lesdites plusieurs configurations de gestion de données, en fonction d'au moins une donnée de sélection ou étiquette comprise dans un paquet de données à traiter reçu par lesdits moyens récepteurs de données.

20. Dispositif selon l'une des revendications 16 à 19, dans lequel lesdits moyens formant une interface réseau comportent en outre des moyens d'émission d'interruptions.

21. Dispositif selon l'une des revendications 16 à 20, ladite ressource comprenant des moyens pour traiter plusieurs flux simultanés de données ou/et de crédits en entrée, et des moyens pour traiter plusieurs flux simultanés de données ou/et de crédits en sortie.

22. Dispositif selon l'une des revendications 16 à 21, ladite ressource comprenant des moyens pour traiter plusieurs flux séquentiels de données ou/et de crédits en entrée, et des moyens pour traiter plusieurs flux séquentiels de données ou/et de crédits en sortie.

23. Dispositif de réseau sur puce comprenant :
- au moins une ressource selon l'une des revendications 21 ou 22,
- au moins une autre ressource selon l'une des revendications 21 ou 22, ladite ressource et ladite autre ressource ayant des moyens de traitement de flux de données ou/et de crédits différents.

24. Dispositif de réseau selon l'une des revendications 14 à 23, comprenant en outre un contrôleur de réseau apte à initialiser les communications dans le réseau.

## Patentansprüche

1. Verfahren zum Verarbeiten von Daten in einem Netzwerk-auf-Chip, das aus mehreren Ressourcen (310, 320, 330, 340, 350) besteht, die dazu geeignet sind, miteinander zu kommunizieren und Verarbeitungen auszuführen, sowie aus zumindest einer Netzwerksteuerung (300), die dazu geeignet ist, Kommunikationen im Netzwerk zu initialisieren, wobei das Verfahren umfasst:
- Empfangen und Abspeichern von mehreren von der Netzwerksteuerung gesendeten Gutschriftverwaltungskonfigurationen durch eine erste Ressource,
- Empfangen einer von der Netzwerksteuerung gesendeten Anweisung zum sequentiellen Auswählen von Gutschriftverwaltungskonfigurationen durch die erste Ressource,
- Auswählen einer aktuellen Gutschriftverwaltungskonfiguration aus einer Vielzahl verschiedener Gutschriftverwaltungskonfigurationen, die in der ersten Ressource abgespeichert sind,
- einen ersten Schritt der Kommunikation zwischen zumindest einer ersten Ressource (310) und zumindest einer zweiten Ressource (320), wobei der Kommunikationsschritt umfasst:
a) zumindest eine Ausgabe einer ersten Mehrzahl von Gutschriften an die zweite Ressource (320) durch die erste Ressource (310), wobei der Bestimmungsort der Gutschriften und die Anzahl an von der ersten Ressource (310) ausgegebenen Gutschriften in der aktuellen Gutschriftverwaltungskonfiguration, die die erste Ressource verwendet, definiert sind, wobei die aktuelle Gutschriftverwaltungskonfiguration gemäß der sequentiellen Auswahlanweisung ausgewählt wurde,
b) zumindest einen Empfang einer ersten Vielzahl von von der zweiten Ressource (320) gesandten zu verarbeitenden Daten durch die erste Ressource (310), wobei das Senden von zu verarbeitenden Daten an die erste Ressource durch die zweite Ressource nach einem Empfang der von der ersten Ressource ausgegebenen Gutschriften durch die zweite Ressource autorisiert wird.

2. Verfahren nach Anspruch 1, wobei das Verfahren einen zweiten Schritt der Kommunikation zwischen der ersten Ressource und der zweiten Ressource oder einer dritten Ressource (330) umfasst, wobei der zweite Kommunikationsschritt umfasst:
a') zumindest eine Ausgabe einer zweiten Vielzahl von speziellen Daten oder "Gutschriften" an die zweite (320) oder dritte Ressource (330) durch die erste Ressource (310),
b') zumindest einen Empfang einer zweiten Vielzahl von von der zweiten (320) oder der dritten Ressource (330) gesendeten zu verarbeitenden Daten durch die erste Ressource (310).

3. Verfahren nach einem der Ansprüche 1 oder 2, wobei die erste Ressource (310) zumindest einen Teil der von der zweiten (320) oder dritten Ressource (330) gesendeten zu verarbeitenden Daten verarbeitet.

4. Verfahren nach einem der Ansprüche 1 bis 3, wobei die erste Ressource (310) nach Empfang der ersten und/oder zweiten Vielzahl von zu verarbeitenden Daten an eine vierte Ressource (340) zu verarbeitende Daten und/oder durch die erste Ressource (310) verarbeitete Daten sendet.

5. Verfahren nach Anspruch 2, umfassend vor dem Schritt a') oder zwischen den Schritten a') und b') oder nach dem Schritt b') das Senden zumindest eines Teils der von der ersten Ressource (310) im Laufe von Schritt b) empfangenen zu verarbeitenden Daten und/oder zumindest eines Teils der von der ersten Ressource im Laufe von Schritt b) empfangenen und von der ersten Ressource (310) verarbeiteten Daten an eine vierte Ressource (330).

6. Verfahren nach einem der Ansprüche 1 bis 5, umfassend einen vorhergehenden Schritt des Sendens von Datenverwaltungskonfigurationsdaten an die erste Ressource (310) durch die Netzwerksteuerung (300), welche Daten eine oder mehrere Arten von auszuführender Datenverarbeitung und/oder zumindest eine weitere Ressource angeben, an die die verarbeiteten oder zu verarbeitenden Daten zu senden sind, dann Abspeichern dieser Datenverwaltungskonfigurationsdaten in der ersten Ressource.

7. Verfahren nach einem der Ansprüche 1 bis 6, wobei die erste Ressource (310) Datenverwaltungskonfigurationsdaten abspeichert, die eine oder mehrere Arten von auszuführender Datenerarbeitung und/oder zumindest eine weitere Ressource (330) angeben, an die verarbeitete oder zu verarbeitende Daten zu senden sind.

8. Verfahren nach einem der Ansprüche 6 oder 7, wobei die im Laufe von Schritt b) und/oder im Laufe von Schritt b') empfangenden zu verarbeitenden Daten sogenannte Tag-Daten umfassen, die Datenverwaltungs-Konfigurationsauswahldaten zum Auswählen aus einer Vielzahl von abgespeicherten Datenverwaltungskonfigurationen enthalten.

9. Verfahren nach einem der Ansprüche 1 bis 8, wobei die in der ersten Ressource (310) abgespeicherten Gutschriftverwaltungskonfigurationen vor jeglichem Daten- bzw. Gutschriftenaustausch zwischen den Ressourcen (310, 320, 330, 340) des Netzwerks von der Netzwerksteuerung (300) an die erste Ressource (310) gesendet wurden.

10. Verfahren nach einem der Ansprüche 1 bis 9, wobei die Menge an durch die erste Ressource empfangenen Daten Funktion von der Menge an von dieser ersten Ressource in Schritt a) oder in Schritt a') ausgegeben Gutschriften ist.

11. Verfahren nach einem der Ansprüche 1 bis 10, wobei den Schritten a) und/oder a') ein Senden einer Startanweisung zum Starten von Kommunikationen in dem Netzwerk durch die Netzwerksteuerung vorausgeht.

12. Verfahren nach einem der Ansprüche 1 bis 11, wobei die Anweisung zum sequentiellen Auswählen einer oder mehrerer Gutschriftverwaltungskonfigurationen in einer Anweisung zum Starten der Kommunikationen in dem Netz enthalten ist, die vor den Schritten a) und/oder a') von der Netzwerksteuerung gesendet wird.

13. Verfahren nach einem der Ansprüche 1 bis 12, umfassend zumindest einen Schritt des Unterbrechens, der von einer Ressource ausgeht und für die Netzwerksteuerung bestimmt ist.

14. Netzwerk-auf-Chip-Vorrichtung, enthaltend zumindest eine Ressource, die dazu geeignet ist, mit einer oder mehreren weiteren Ressourcen des Netzwerks zu kommunizieren und dazu geeignet ist, zumindest eine Datenverarbeitung durchzuführen, wobei die Ressource Mittel enthält, die eine Schnittstelle mit dem Netzwerk bilden, wobei die Mittel zum Bilden einer Schnittstelle mit dem Netzwerk enthalten:
- Speichermittel (204, 205, 206), die dazu geeignet sind, mehrere verschiedene Gutschriftverwaltungskonfigurationen abzuspeichern,
- Konfigurationsauswahlmittel (214), die dazu geeignet sind, zumindest eine aktuelle Gutschriftverwaltungskonfiguration aus den mehreren verschiedenen Gutschriftverwaltungskonfigurationen auszuwählen, wobei die Auswahl in Abhängigkeit von einer Anweisung zum sequentiellen Auswählen von Gutschriftverwaltungskonfigurationen erfolgt, die von einer Netzwerksteuerung ausgegeben wird, die zum Initialisieren der Kommunikationen in dem Netzwerk vorgesehen ist,
- Ausgabemittel (218) zum Ausgeben von Gutschriften, die dazu geeignet sind, Gutschriften an eine oder mehrere Ressourcen des Netzwerks auszugeben, wobei der Bestimmungsort der Gutschriften, die von den Gutschriftausgabemitteln ausgegeben werden sollen, Funktion von einer Gutschriftverwaltungskonfiguration ist, die von den Konfigurationsauswahlmitteln (214) ausgewählt wird,
- Autorisierungsmittel (220) zum Autorisieren der Ausgabe von zu verarbeitenden Daten durch Datenausgabemittel an zumindest eine erste Ressource der weiteren Ressourcen des Netzwerks nach Empfang von von der ersten Ressource stammenden Gutschriften durch Gutschriftenempfangsmittel,
- wobei die Gutschriftenempfangsmittel dazu geeignet sind, Gutschriften von einer oder mehreren Ressourcen des Netzwerks zu empfangen,
- wobei die Datenausgabemittel (228, 229) zum Ausgeben von zu verarbeitenden Daten dazu geeignet sind, zu verarbeitende Daten an eine oder mehrere Ressourcen des Netzwerks auszugeben,
- Datenempfangsmittel (225, 226), die dazu geeignet sind, zu verarbeitende Daten von einer oder mehreren Ressourcen des Netzwerks zu empfangen.

15. Vorrichtung nach Anspruch 14, wobei die eine Netzwerk-Schnittstelle bildenden Mittel ferner enthalten:
- Autorisierungsmittel zum Autorisieren des Empfangs von Daten von zumindest einer zweiten Ressource nach Empfang von Gutschriften von der zweiten Ressource.

16. Vorrichtung nach Anspruch 14 oder 15, wobei der Bestimmungsort von Daten, die von den Datenausgabemitteln ausgegeben werden können, Funktion von einer Art von Datenverwaltungsprogrammierung oder - Konfiguration ist,
- wobei die Speichermittel ferner gestatten, mehrere verschiedene Datenverwaltungskonfigurationen abzuspeichern,
- wobei die Konfigurationsauswahlmittel ferner gestatten, zumindest eine aktuelle Datenverwaltungskonfiguration aus den mehreren Datenverwaltungskonfigurationen auszuwählen.

17. Vorrichtung nach Anspruch 16, wobei die Konfigurationsauswahlmittel ferner gestatten, zumindest eine aktuelle Datenverwaltungskonfiguration aus den mehreren Datenverwaltungskonfigurationen in Abhängigkeit von zumindest eine Auswahl- oder Tagdatenangabe auszuwählen, die in einem zu verarbeitenden Datenpaket enthalten ist, das von den Datenempfangsmitteln empfangen wird.

18. Vorrichtung nach einem der Ansprüche 16 oder 17, wobei die Ressource ferner Mittel enthält, die einen Funktionskern bilden, der dazu geeignet ist, zumindest eine Datenverarbeitung durchzuführen.

19. Vorrichtung nach Anspruch 18, wobei die Verarbeitung, die von den einen Funktionskern bildenden Mitteln durchgeführt wird, Funktion von einer Art von Datenverwaltungsprogrammierung oder-Konfiguration ist, wobei die Netzwerk-Schnittstellenmittel ferner enthalten: Mittel, die dazu geeignet sind, zumindest eine aktuelle Datenverwaltungskonfiguration aus den mehreren Datenverwaltungskonfigurationen in Abhängigkeit von zumindest einer Auswahl- oder Tagdatenangabe auszuwählen, die in einem zu verarbeitenden Datenpaket enthalten ist, das von den Datenempfangsmitteln empfangen wird.

20. Vorrichtung nach einem der Ansprüche 16 bis 19, wobei die eine Netzwerk-Schnittstelle bildenden Mittel ferner Mittel zur Ausgabe von Unterbrechungen enthalten.

21. Vorrichtung nach einem der Ansprüche 16 bis 20, wobei die Ressource Mittel zum Verarbeiten von mehreren gleichzeitigen Daten- und/oder Gutschriftenströmen am Eingang und Mittel zum Verarbeiten von mehreren gleichzeitigen Daten- und/oder Gutschriftenströmen am Ausgang enthält.

22. Vorrichtung nach einem der Ansprüche 16 bis 21, wobei die Ressource Mittel zum Verarbeiten von mehreren sequentiellen Daten- und/oder Gutschriftenströmen am Eingang und Mittel zum Verarbeiten von mehreren sequentiellen Daten- und/oder Gutschriftenströmen am Ausgang enthält.

23. Netzwerk-auf-Chip-Vorrichtung, enthaltend:
- zumindest eine Ressource nach einem der Ansprüche 21 oder 22,
- zumindest eine weitere Ressource nach einem der Ansprüche 21 oder 22, wobei die Ressource und die weitere Ressource Mittel zum Verarbeiten von verschiedenen Daten- und/oder Gutschriftenströmen enthalten.

24. Netzwerk-Vorrichtung nach einem der Ansprüche 14 bis 23, ferner enthaltend eine Netzwerksteuerung, die dazu geeignet ist, die Kommunikationen im Netzwerk zu initialisieren.

## Claims

1. Data processing method in a network on chip formed of a plurality of resources (310,320,330,340,350) capable of communicating between one another and of processing, and of at least one network controller (300) capable of initialising the communications in the network, the method comprising:
- the receipt and storage in memory by a first resource of several credit management configurations sent by the network controller,
- the reception by the first resource of a sequential selection instruction for credit management configurations sent by the network controller;
- the selection of a common credit management configuration from the several different credit management configurations stored in the memory of the first resource,
- a first communications step between at least one first resource (310) and at least one second resource (320), said communication step comprising:
a) at least one emission by the first resource (310) of a first plurality of credits destined for the second resource (320), the destination and the number of the credits emitted by the first resource (310) being defined in said common credit management configuration that the first resource uses, the common credit management configuration being selected according to said sequential selection instruction,
b) at least one receipt by the first resource (310) of a first plurality of data to process sent by the second resource (320), the emission of data to be processed sent by the second resource to the first resource being authorised following the receipt by the second resource of credits emitted by the first resource.

2. Method according to claim 1, the method comprising at least one second communication step between said first resource and said second resource or a third resource (330), said second communication step comprising:
a') at least one emission by the first resource (310) of a second plurality of special data or "credits" destined for the second (320) or third resource (330),
b') at least one receipt by the first resource (310) of a second plurality of data to process sent by the second (320) or the third resource (330).

3. Method according to one of claims 1 or 2, the first resource (310) processing at least part of the data to be processed sent by the second (320) or the third resource (330).

4. Method according to one of claims 1 to 3, the first resource (310) sending, to a fourth resource (340), following the receipt of the first and/or the second plurality of data to process, data to process and/or data processed by the first resource (310).

5. Method according to claim 2, comprising, before step a') or between steps a') and b') or after step b'), the emission to a fourth resource (330), of at least part of the data to process received by the first resource (310) during step b) and/or at least part of the data received by the first resource during step b) and processed by the first resource (310).

6. Method according to one of claims 1 to 5, comprising a step prior to the emission to the first resource (310), by said network controller (300), of data management configuration data, indicating one or more types of processing on data and/or at least one other resource to which the data that is processed or is to process is yo be sent, then storage of this data management configuration data in the memory of the first resource.

7. Method according to one of claims 1 to 6, the first resource (310) memorising data management configuration data indicating one or more types of processing to process data and/or at least one other resource (330) to which the data that is processed or is to process is sent.

8. Method according to claims 6 or 7, the data to process received during step b) and/or during step b') comprising data called tag data comprising data management configuration selection data among a plurality of data management configurations stored.

9. Method according to one of claims 1 to 8, said credit management configurations stored in the memory of the first resource (310) being sent to the first resource by said network controller (300), prior to any exchange of data or credits between the resources (310,320,330,340) of the network.

10. Method according to one of claims 1 to 9, the quantity of data received by the first resource depending on the quantity of credits emitted by this first resource at step a) or at step a').

11. Method according to one of claims 1 to 10, steps a) and/or a') being preceded by the network controller issuing an instruction to start the communications in the network.

12. Method according to one of claims 1 to 11, said sequential selection instruction for one or more credit management configurations, being comprised in an instruction to start communications in the network sent prior to steps a) and/or a') by the network controller.

13. Method according to one of claims 1 to 12, comprising at least one interruption step from a resource and destined for the network controller.

14. Network on chip device comprising at least one resource capable of communicating with one or several resources of the network and capable of carrying out at least one data processing operation, said resource comprising means forming an interface with the network, the means forming an interface with the network comprising:
- storage means (204, 205, 206) capable of storing several different credit management configurations,
- configuration selection means (214) capable of selecting at least one common credit management configuration from the several different credit management configurations, the selection being performed according to a sequential selection instruction of credit management configurations, emitted by a network controller capable of initialising the communications in the network,
- means (218) for emitting credits capable of emitting credits to one or more resources of the network, the destination of the credits to be emitted by the credit emission means depending on a credit management configuration, selected by the means for selecting a configuration (214);
- means (220) for authorising the emission by data emission means, of data to process to at least one first resource of said other resources of the network following the receipt, by credit receiving means, of credits from said first resource,
- said credit receiving means, capable of receiving credits from one or more resources of the network,
- said emission means (228, 239) for emitting data to process, capable of emitting data to process to one or more resources of the network,
- means (225, 226) for receiving data capable of receiving data to process from one or more resources of the network.

15. Device of claim 14, the means forming a network interface further comprising:
- means for authorising the receipt of data from at least one second resource following the receipt of credits from said second resource.

16. Device of claim 14 or 15, wherein the destination of data that the data emission means are capable of emitting depends on a type of programming or configuration called data management,
- said storage means permitting moreover to store several different data management configurations,
- said configuration selection means permitting moreover to select at least one common data management configuration from said several data management configurations.

17. Device of claim 16, the configuration selection means permitting moreover the selection of at least one common data management configuration from said several data management configurations, depending on at least one selection data or tag comprised in a data packet to be processed received by said data receiving means.

18. Device of claims 16 or 17, the resource comprising moreover means forming an operating core capable of carrying out at least one data process.

19. Device of claim 18, wherein said processing carried out by said means forming an operating core depends on a type of programming or configuration called data management, the network interface means comprising moreover: means capable of selecting at least one common data management configuration from said several data management configurations, depending on at least one selection data or tag comprised in a data packet to be processed received by said data receiving means.

20. Device of any of claims 16 or 19, wherein said means forming a network interface comprise among others means of emitting interruptions.

21. Device of any of claims 16 to 20, said resource comprising means of processing several simultaneous incoming data flows and/or credits, and means for processing several simultaneous outgoing data flows and/or credits.

22. Device of any of claims 16 to 21, said resource comprising means of processing several incoming sequential data flows and/or credits, and means of processing several outgoing sequential data flows and/or credits.

23. Network on chip device comprising:
- at least one resource of any of claims 21 or 22
- at least one other resource of any of claims 21 or 22, said resource and said other resource having means of processing different data flows and/or credits.

24. Network device of any of claims 14 to 23, comprising moreover a network controller capable of initialising the communications in the network.
